# EUROPÄISCHE PATENTSCHRIFT

(11) **EP 2 825 787 B1**
(45) Veröffentlichungstag und Bekanntmachung des Hinweises auf die Patenterteilung: **15.11.2017**
(21) Anmeldenummer: 13707311.0
(22) Anmeldetag: 20.02.2013
(51) Int. Cl.: F16D 13/70, F16F 15/14

(54) **REIBUNGSKUPPLUNG MIT FLIEHKRAFTPENDEL**
FRICTION CLUTCH WITH CENTRIFUGAL-FORCE PENDULUM
EMBRAYAGE À FRICTION POUR PENDULE À FORCE CENTRIFUGE

(30) Priorität: 16.03.2012 DE 102012204200; 20.03.2012 DE 102012204351
(43) Veröffentlichungstag der Anmeldung: 21.01.2015
(73) Patentinhaber: Schaeffler Technologies AG & Co. KG, 91074 Herzogenaurach (DE)
(72) Erfinder: KREBS, Florian, 77815 Bühl (DE)
(86) Internationale Anmeldenummer: PCT/EP2013/053315
(87) Internationale Veröffentlichungsnummer: WO 2013/135468

(56) Entgegenhaltungen:
- WO-A2-2011/076176
- DE-A1- 10 005 545
- DE-A1-102008 059 297
- DE-A1-102010 054 556

## Beschreibung

Die Erfindung betrifft eine Reibungskupplung zum Kuppeln einer Antriebswelle eines Kraftfahrzeugmotors mit mindestens einer Getriebeeingangswelle, wobei die Reibungskupplung mindestens ein Fliehkraftpendel zur drehzahlabhängigen Drehschwingungsdämpfung von über die Antriebswelle eingeleiteten Drehschwingungen aufweist.
Aus DE 10 2009 042 831 A1 ist eine Reibungskupplung mit einer Anpressplatte zum Verpressen einer Kupplungsscheibe zwischen der Anpressplatte und einer Gegenplatte bekannt, bei der mehrere in Umfangsrichtung zueinander beabstandete Fliehkraftpendel mit der Gegenplatte verbunden sind. Jedes der Fliehkraftpendel weist jeweils eine zwischen jeweils zwei Führungsblechen bewegbar aufgenommene Pendelmasse zur fliehkraftbedingten Verlagerung der Pendelmasse auf. Zwischen zwei benachbarten Fliehkraftpendeln ist jeweils eine Rückstellfeder vorgesehen, die im Wesentlichen auf einem gemeinsamen Radius mit der Anpressplatte und einem getriebeseitigen Kupplungsdeckel verbunden ist, um die Anpressplatte automatisch in eine definierte Position relativ zur Gegenplatte zu bewegen, wenn auf die Anpressplatte keine Betätigungskraft wirkt.
Aus der WO 2011/076176 A2 ist eine Reibungskupplung mit einem Zweimassenschwungrad bekannt. Diese Reibkupplung weist ebenso ein Fliehkraftpendel auf. Die Pendelmassen sind hier in Trägerelementen gelagert, bzw. aufgehängt, wobei eines der Trägerelemente stofflich einstückig mit der Sekundärschwungmasse des, Zweimassenschwungrades ausgebildet ist. Die WO 2011/076176 A2 offenbart den Oberbegriff von Anspruch 1. Es ist die Aufgabe der Erfindung eine Reibungskupplung mit mindestens einem Fliehkraftpendel zu schaffen, die einen geringen Bauraum benötigt.
Die Lösung der Aufgabe erfolgt erfindungsgemäß durch die Merkmale des Anspruchs 1. Bevorzugte Ausgestaltungen der Erfindung sind in den Unteransprüchen angegeben, die jeweils einzeln oder in Kombination einen Aspekt der Erfindung darstellen können.
Erfindungsgemäß ist eine Reibungskupplung, insbesondere eine Reibungskupplung für eine Doppelkupplung, zum Kuppeln einer Antriebswelle eines Kraftfahrzeugmotors mit mindestens einer Getriebeeingangswelle vorgesehen. Diese Reibungskupplung umfasst eine Gegenplatte, eine relativ zur Gegenplatte verlagerbare Anpressplatte zum Verpressen einer Kupplungsscheibe zwischen der Gegenplatte und der Anpressplatte und mindestens ein mit der Gegenplatte und/oder einem Kupplungsdeckel verbundenes Fliehkraftpendel zur drehzahlabhängigen Drehschwingungsdämpfung, wobei das Fliehkraftpendel eine Pendelmasse aufweist, die zwischen zwei einander gegenüberliegend angeordneten Führungsflächen beweglich geführt ist, wobei zumindest eine der beiden Führungsflächen unmittelbar an der Gegenplatte und/oder unmittelbar an dem Kupplungsdeckel ausgebildet ist. Die Gegenplatte und/oder der Kupplungsdeckel ist/sind also einstückig mit dem die beiden Führungsflächen aufweisenden Fliehkraftpendel beziehungsweise mit den die beiden Führungsflächen aufweisenden Fliehkraftpendeln verbunden.

Dadurch, dass das mindestens eine Fliehkraftpendel keine zwei von den beiden Kupplungsbauteilen Gegenplatte und Kupplungsdeckel separaten/separierbaren Führungselemente, wie zum Beispiel Führungsbleche, zum Führen seiner Pendelmasse aufweist, verringert sich die Zahl der benötigten Bauteile und die Größe des benötigen axialen Bauraums wird verringert.

Eine derartige Reibungskupplung kann bei Einfachkupplungs- und Doppelkupplungsanordnungen eingesetzt werden. Die Reibungskupplung kann eine Trockenkupplung oder eine Nasskupplung sein.

Gemäß einer bevorzugten Ausgestaltung der Erfindung ist vorgesehen, dass die eine der beiden Führungsflächen des Fliehkraftpendels unmittelbar an der Gegenplatte oder unmittelbar an dem Kupplungsdeckel ausgebildet ist und die andere der beiden Führungsflächen von einer Seite eines Führungsblechs gebildet wird.

Gemäß einer weiteren bevorzugten Ausgestaltung der Erfindung sind mehrere Fliehkraftpendel mit je einer Pendelmasse vorgesehen, die bezüglich der Reibungskupplung umfänglich verteilt sind. Dabei sind diese Fliehkraftpendel und insbesondere deren Pendelmassen bevorzugt umfänglich regelmäßig verteilt. Dazu sind zum Beispiel drei oder sechs Fliehkraftpendel mit jeweils einer Pendelmasse zwischen zwei Führungsflächen vorgesehen.

Es ist insbesondere vorgesehen, dass die mehreren Fliehkraftpendel eine Fliehkraftpendeleinheit bilden und zwei gemeinsame Führungsflächen aufweisen. Diese zwei gemeinsamen Führungsflächen sind einander gegenüberliegend angeordnet und führen in jeweils einem Umfangsabschnitt eine Pendelmasse eines zugehörigen Fliehkraftpendels.

Gemäß einer bevorzugten Ausführungsform der Erfindung sind die beiden Führungsflächen ringförmig ausgebildet. Dabei sind die beiden ringförmig ausgebildeten Führungsflächen insbesondere ringförmige Ebenen. Diese beiden ringförmigen Ebenen sind einander gegenüberliegend angeordnet und führen in jeweils einem Ringabschnitt die dazwischen angeordnete Pendelmasse des zugehörigen Fliehkraftpendels dieses Abschnitts.

In einer erfindungsgemäßen zweiten alternativen Ausgestaltung ist die Pendelmasse des mindestens einen Fliehkraftpendels axial zwischen der Gegenplatte und einem motorseitigen Ausgleichs- und Verbindungselement, insbesondere einer Flexplate beziehungsweise einem Zweimassenschwungrad angeordnet.

Gemäß einer weiteren bevorzugten Ausführungsform der Erfindung ist vorgesehen, dass das Führungsblech mittels Halteelementen, insbesondere Haltehülsen zum Hindurchführen von Schraubenschäften, an der Gegenplatte oder an dem Kupplungsdeckel beabstandet befestigt ist.

Gemäß noch einer weiteren bevorzugten Ausführungsform der Erfindung ist die mindestens eine Pendelmasse mittels mindestens einer Kulissenführung zwischen den Führungsflächen beweglich geführt. Die Kulissenführung gibt dabei die mögliche Bewegung vor. Dadurch kann die (jeweilige) Pendelmasse in Abhängigkeit von angreifenden Fliehkräften ihre Lage ändern und dadurch das wirksame Massenträgheitsmoment zur Dämpfung von Drehschwingungen drehzahlabhängig modifizieren. Derartige Kulissenführungen sind beispielsweise aus der DE 10 2009 042 831 A1 bekannt. Dabei ist insbesondere vorgesehen, dass die mindestens eine Pendelmasse und die die Führungsflächen bildenden Elemente, also insbesondere die Gegenplatte, der Kupplungsdeckel und/oder das Führungsblech, im Bereich dieser Führungsflächen mit Kulissenausnehmungen zum Eingriff mindestens eines Führungsstiftes der Kulissenführung versehen sind.

Gemäß einer bevorzugten Ausgestaltung der Erfindung weist die Reibungskupplung mindestens eine mit der Anpressplatte verbundene, insbesondere als Blattfeder ausgestaltete, Rückstellfeder zur automatischen Positionierung der Anpressplatte relativ zur Gegenplatte bei einer fehlenden auf die Anpressplatte wirkenden Betätigungskraft auf. Bevorzugt ist eine der Anzahl der Pendelmassen entsprechende Zahl von Rückstellfedern vorgesehen.

Mit Vorteil ist dabei vorgesehen, dass die blattfederartige Rückstellfeder eine erste Befestigungsstelle aufweist, die auf einer mit dem Fliehkraftpendel im Wesentlichen gemeinsamen radialen Höhe mit der Gegenplatte und/oder dem getriebeseitigen Kupplungsdeckel verbunden ist, und eine zweite Befestigungsstelle aufweist, die auf einer zu dem Fliehkraftpendel im Wesentlichen geringeren radialen Höhe mit der Anpressplatte verbunden ist.

Es können mit solchen blattfederartigen Rückstellfedern relativ viele (beispielsweise insgesamt sechs) Fliehkraftpendel und/oder Pendelmassen auf einem gemeinsamen Radius in Umfangsrichtung positioniert werden. Es ist auch möglich die Erstreckung des Fliehkraftpendels in Umfangsrichtung zu vergrößern, um beispielsweise zwei oder mehr Pendelmassen für das Fliehkraftpendel vorzusehen. Dadurch, dass die zweite Verbindungsstelle der Rückstellfeder auf einem geringeren Radius als die erste Verbindungsstelle der Rückstellfeder vorgesehen ist, ist es nicht erforderlich den Bauraumbedarf nach radial außen zu vergrößern. Besonders bevorzugt weist die Gegenplatte eine größere Erstreckung nach radial außen auf als die Anpressplatte, so dass das Fliehkraftpendel auf einer gemeinsamen axialen Höhe zur Anpressplatte radial außerhalb zur Anpressplatte mit der Gegenplatte verbunden sein kann. Dadurch ist es insbesondere konstruktiv einfach über die Gegenplatte ein insbesondere von einem Kraftfahrzeugmotor eingeleitetes Drehmoment in die Reibungskupplung einzuleiten. Insbesondere kann die Gegenplatte besonders einfach mit einem in Kraftflussrichtung vorgelagerten Drehschwingungsdämpfer, bevorzugt einem Zweimassenschwungrad, gekoppelt werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine Fliehkraftpendeleinheit einer Reibungskupplung gemäß einer bevorzugten Ausführungsform der Erfindung, bei der eine der Führungsflächen direkt an einem Kupplungsdeckel der Reibungskupplung ausgebildet ist,
- Fig. 2:: die Fliehkraftpendeleinheit und der Kupplungsdeckel der Fig. 1 in einer Explosionsdarstellung und
- Fig. 3:: eine Reibungskupplung gemäß einer bevorzugten Ausführungsform der Erfindung, bei der eine der Führungsflächen der Fliehkraftpendeleinheit direkt an einer Gegen(druck)platte der Reibungskupplung ausgebildet ist.

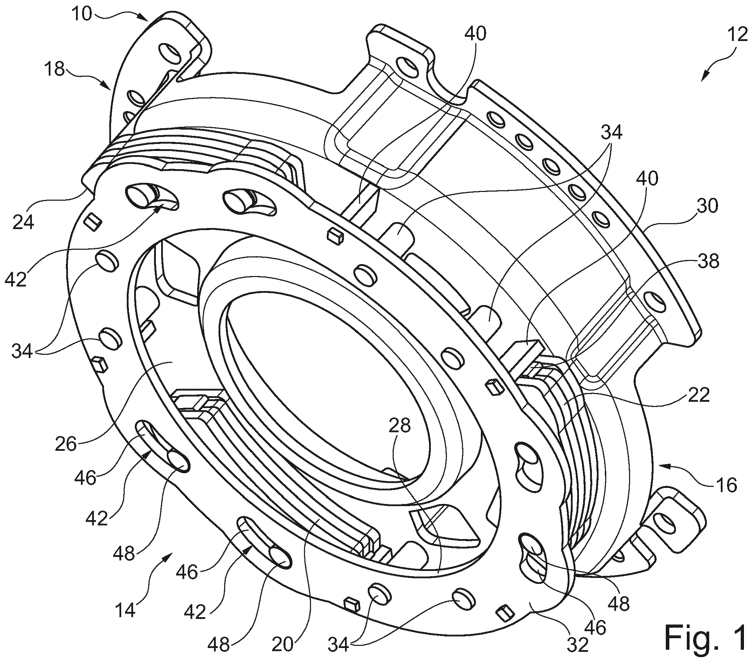

Die Fig. 1 zeigt eine Fliehkraftpendeleinheit 10 einer Reibungskupplung 12 mit mehreren (hier drei) Fliehkraftpendeln 14, 16, 18, die jeweils eine Pendelmasse 20, 22, 24 aufweisen. Jede der Pendelmassen 20, 22, 24 ist zwischen zwei einander gegenüberliegend angeordneten Führungsflächen 26, 28 beweglich geführt. Dabei nutzen die Fliehkraftpendel 14, 16, 18 zwei gemeinsame Führungsflächen 26, 28, die einander gegenüberliegend angeordnet sind. Die beiden gemeinsamen Führungsflächen 26, 28 sind jeweils als ringförmige Ebenen ausgebildet. Die eine der Führungsflächen 26 ist unmittelbar an einem Kupplungsdeckel 30 der Reibungskupplung 12 ausgebildet. D.h. ein ringförmiger ebener Teil der Oberfläche bildet die eine Führungsfläche 26. Die andere der beiden Führungsflächen 28 ist von einer ebenen Seite eines Führungsbleches 32 gebildet. Dieses ist als in Umfangsrichtung geschlossener Ring ausgestaltet. Da das Führungsblech 32 eine der gemeinsamen Führungsflächen 28 für alle Fliehkraftpendel 14, 16, 18 der Fliehkraftpendeleinheit 10 bildet, ist es sowohl Teil einer jeden der Fliehkraftpendel 14, 16, 18 als auch Teil der Fliehkraftpendeleinheit 10 insgesamt. Das Führungsblech 32 ist mittels Halteelementen 34 an dem Kupplungsdeckel 30 beabstandet befestigt.

Zwischen den von dem Kupplungsdeckel 30 und dem Führungsblech 32 gebildeten ringförmigen Führungsflächen 26, 28 sind über den Umfang des Rings verteilt die Pendelmassen 20, 22, 24 angeordnet. Also bei drei Pendelmassen 20, 22, 24 im Winkelabstand von 120°. Die Pendelmassen sind dabei in einer gemeinsamen axialen Ebene angeordnet, in der sie sich auch bewegen können, da diese Ebene parallel zu den ringförmigen Ebenen der Führungsflächen 26, 28 verläuft. Die Halteelemente 34 sind dann paarweise in Umfangsabschnitten zwischen den Pendelmassen 20, 22, 24 auf gleicher radialer Höhe wie diese angeordnet. Die Pendelmassen 20, 22, 24 der Fliehkraftpendel 14, 16, 18 bestehen jeweils aus Blechpaketen mit mehreren Blechen 36, die durch Niete 37 miteinander verbunden sind. Jedes der Blechpakete ist an jedem seiner beiden umfänglichen Enden mit einem Abschlusselement 38 versehen. Die Umfangsabschnitte zwischen den Pendelmassen 20, 22, 24 werden durch jeweilige Anschlagelemente 40 begrenzt, an die die Pendelmassen 20, 22, 24 in den Extremstellungen ihrer (Pendel-)Bewegung mit ihren Abschlusselementen 38 anschlagen können.

Die Pendelmassen 20, 22, 24 der Fliehkraftpendel 14, 16, 18 werden jeweils mittels mindestens einer Kulissenführung 42 zwischen den Führungsflächen 26, 28 auf entsprechenden Bahnen geführt. Dazu ist jede der Pendelmassen 20, 22, 24 mit Kulissenausnehmungen 44 sowie der Kupplungsdeckel 30 im Bereich seiner Führungsfläche 26 und das Führungsblech 32 im Bereich seiner Führungsfläche 28 mit weiteren Kulissenausnehmungen 46 zum Eingriff mindestens eines Führungsstiftes 48 versehen. Dabei sind pro Pendelmasse 20, 22, 24 je zwei Führungsstifte 48 vorgesehen. Jeder der (hier sechs) Führungsstifte 48 durchgreift eine Kulissenausnehmung 44 seiner zugeordneten Pendelmasse 20, 22, 24 und die weiteren Kulissenausnehmungen 46 der die Führungsflächen 26, 28 bildenden Elemente 30, 32, also die des Kupplungsdeckels 30 und die des Führungsblechs 32.

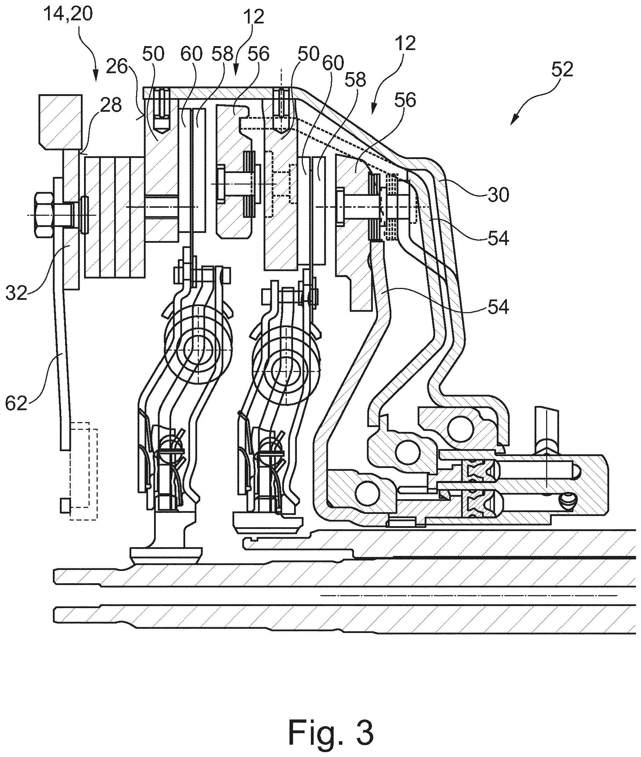

Die Pendelmassen 20, 22, 24 der in Fig. 1 gezeigten Fliehkraftpendel 14, 16, 18 sind also axial zwischen dem getriebeseitigen Kupplungsdeckel 30 und der Gegenplatte (Gegendruckplatte) 50 der Reibungskupplung 12 angeordnet. Eine entsprechende Gegenplatte 50 einer anderen Ausführungsform der Reibungskupplung ist in Fig. 3 gezeigt.

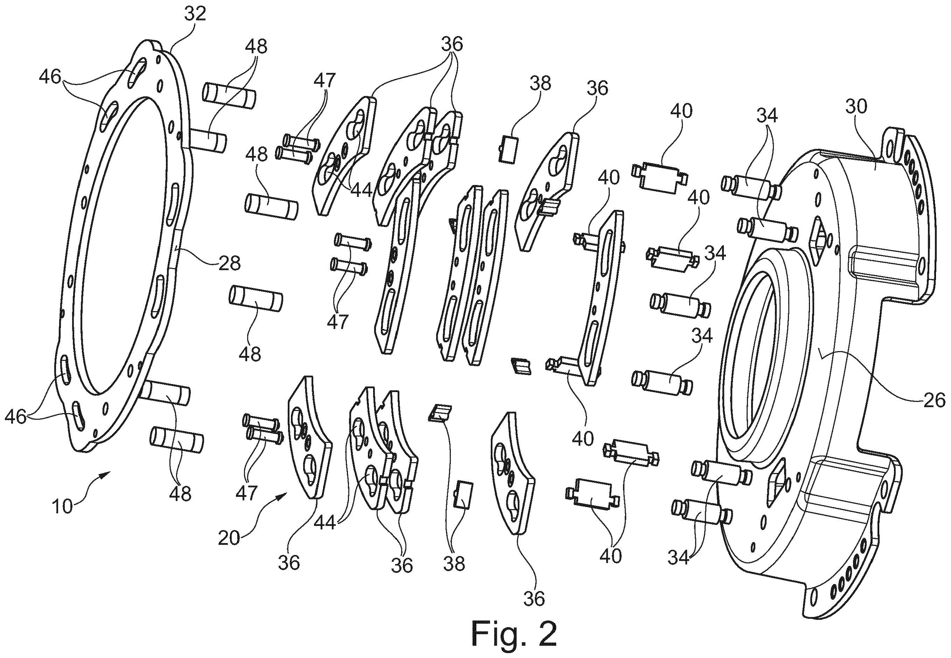

Die Fig. 2 zeigt die Fliehkraftpendeleinheit 10 und der Kupplungsdeckel 30 der Fig. 1 in einer Explosionsdarstellung. In dieser Darstellung ist der Aufbau der Pendelmassen 20, 22, 24 aus den mittels der Niete 37 zusammengefügten Blechpaketen mit den Abschlusselementen 38 gut erkennbar. Weiterhin ist die Verbindung zwischen dem ringförmigen Führungsblech 32 und dem Kupplungsdeckel 30 über die Halte- und Anschlagelemente 34, 40 sichtbar. In den von den Anschlagelementen 40 begrenzten Umfangssegmenten, in denen sich die Pendelmassen 20, 22, 24 befinden, können sich diese im Rahmen der von der jeweiligen Kulissenführung 42 vorgegebenen Bahnen bewegen.

Fig. 3 zeigt eine alternative Ausgestaltung der Fliehkraftpendeleinheit 10 bzw. eine alternative Ausgestaltung der Reibungskupplung 12. Bei dieser Reibungskupplung 12 wird die eine der Führungsflächen von der Gegenplatte 50 der Reibungskupplung 12 beziehungsweise einer der Gegenplatten 50 einer der Reibungskupplungen 12 einer Doppelkupplung 52 gebildet. Dabei ist es jedoch für einige Aspekte der Erfindung nicht entscheidend, dass es sich hier um eine Doppelkupplung 52 handelt.

Um nun eine möglichst allgemeingültige Beschreibung zu formulieren, wird zunächst nur die linke der beiden dargestellten Reibungskupplungen 12 beschrieben und die rechte zunächst außen vor gelassen.

Jede der beiden Reibungskupplungen 12 zeigt eine mittels eines jeweiligen Drucktopfes 54 betätigbare Anpressplatte 56, die entsprechende Gegenplatte 50 und eine zwischen der verlagerbaren Anpressplatte 56 und der Gegenplatte 50 verpressbare Kupplungsscheibe 58 mit entsprechenden Reibbelägen 60. Die Kupplung umfasst weiterhin eine Fliehkraftpendeleinheit 10 mit mehreren Fliehkraftpendeln 14, 16, 18. Die Pendelmassen 20, 22, 24 dieser Fliehkraftpendel 14, 16, 18 (von denen nur das Pendel 14 in der Schnittdarstellung sichtbar ist) sind zwischen den zwei einander gegenüberliegend angeordneten Führungsflächen 26, 28 beweglich geführt. Dabei ist die eine der Führungsflächen 26 unmittelbar an der Gegenplatte 50 ausgebildet. Die andere der Führungsflächen 28 ist von einer Seite eines Führungsblechs 32 gebildet. Dieses Führungsblech 32 ist mit einem motorseitigen Ausgleichs- und Verbindungselement 62 verbunden. Dieses Ausgleichs- und Verbindungselement 62 ist eine motorseitige Flexplate.

In dieser Ausgestaltung der Reibungskupplung 12 ist also jede Pendelmasse 20, 22, 24 der Fliehkraftpendel 14, 16, 18 axial zwischen der Gegenplatte 50 und dem motorseitigen Ausgleichs- und Verbindungselement 62, insbesondere einer Flexplate beziehungsweise einem Zweimassenschwungrad, angeordnet. Der Kupplungsdeckel 30 befindet sich hingegen auf der gegenüberliegenden getriebeseitigen Seite der Reibungskupplung 12 bzw. deren Gegenplatte 50. Die eine Reibungskupplung 12 weist weiterhin mehrere mit der Anpressplatte 56 verbundene, insbesondere als Blattfeder ausgestaltete, Rückstellfedern (nicht gezeigt) auf. Diese dienen zur automatischen Positionierung der Anpressplatte 56 relativ zur Gegenplatte 50, wenn keine auf die Anpressplatte 56 wirkenden Betätigungskraft über den Drucktopf 54 wirkt.

Die in Fig. 3 dargestellte Doppelkupplung weist -wie gesagt- noch eine weitere Reibungskupplung 12 auf. Diese ist getriebeseitig der einen Reibungskupplung angeordnet und weist ebenfalls Anpressplatte 56, Gegenplatte 50, Kupplungsscheibe 58 und einen eigenen zugeordneten Drucktopf 54 auf.

### Bezugszeichenliste

- 10: Fliehkraftpendeleinheit
- 12: Reibungskupplung
- 14: Fliehkraftpendel
- 16: Fliehkraftpendel
- 18: Fliehkraftpendel
- 20: Pendelmasse
- 22: Pendelmasse
- 24: Pendelmasse
- 26: Führungsfläche
- 28: Führungsfläche
- 30: Kupplungsdeckel
- 32: Führungsblech
- 34: Halteelement
- 36: Blech
- 37: Niet
- 38: Abschlusselement
- 40: Anschlagelement
- 42: Kulissenführung
- 44: Kulissenausnehmung
- 46: Kulissenausnehmung
- 48: Führungsstift
- 50: Gegenplatte
- 52: Doppelkupplung
- 54: Drucktopf
- 56: Anpressplatte
- 58: Kupplungsscheibe
- 60: Reibbelag
- 62: Ausgleichs- und Verbindungselement

## Patentansprüche

1. Reibungskupplung (12) zum Kuppeln einer Antriebswelle eines Kraftfahrzeugmotors mit mindestens einer Getriebeeingangswelle, mit
einem motorseitigen Ausgleichs- und Verbindungselement (62),
einer Gegenplatte (50),
einer relativ zur Gegenplatte (50) verlagerbaren Anpressplatte (56) zum Verpressen einer Kupplungsscheibe (58) zwischen der Gegenplatte (50) und der Anpressplatte (56) und
mindestens einem mit der Gegenplatte (50) und/oder einem Kupplungsdeckel (30) verbundenen Fliehkraftpendel (14, 16, 18) zur drehzahlabhängigen Drehschwingungsdämpfung, wobei das Fliehkraftpendel (14, 16, 18) eine Pendelmasse (20 ,22, 24) aufweist, die zwischen zwei einander gegenüberliegend angeordneten Führungsflächen (26, 28) beweglich geführt ist, **dadurch gekennzeichnet, dass** zumindest eine der beiden Führungsflächen (26) unmittelbar an dem Kupplungsdeckel (30) ausgebildet ist und/oder zumindest eine der beiden Führungsflächen (26) unmittelbar an der Gegenplatte (50) ausgebildet ist, wobei die Pendelmassen (20, 22, 24) der Fliehkraftpendel (14, 16, 18) zwischen der Gegenplatte (50) und dem motorseitigen Ausgleichs- und Verbindungselement (62) angeordnet sind.

2. Reibungskupplung nach Anspruch 1, **dadurch gekennzeichnet, dass** die eine der beiden Führungsflächen (26) des Fliehkraftpendels (14, 16, 18) unmittelbar an der Gegenplatte (50) oder unmittelbar an dem Kupplungsdeckel (30) ausgebildet ist und die andere der beiden Führungsflächen (28) von einer Seite eines Führungsblechs (32) gebildet ist.

3. Reibungskupplung nach Anspruch 1 oder 2, **dadurch gekennzeichnet, dass** mehrere Fliehkraftpendel (14, 16, 18) vorgesehen sind, die bezüglich der Reibungskupplung (12) umfänglich verteilt sind.

4. Reibungskupplung nach Anspruch 3, **dadurch gekennzeichnet, dass** die mehreren Fliehkraftpendel (14, 16, 18) eine Fliehkraftpendeleinheit (10) bilden und zwei gemeinsame Führungsflächen (26, 28) aufweisen.

5. Reibungskupplung nach einem der Ansprüche 1 bis 4, **dadurch gekennzeichnet, dass** die beiden Führungsflächen (26, 28) ringförmig ausgebildet sind, insbesondere als ringförmige Ebenen ausgebildet sind.

6. Reibungskupplung nach einem der Ansprüche 2 bis 5, **dadurch gekennzeichnet, dass** das Führungsblech (32) mittels Halteelementen (34), insbesondere Haltehülsen zum Hindurchführen von Schraubenschäften, an der Gegenplatte (50) oder an dem Kupplungsdeckel (30) beabstandet befestigt ist.

7. Reibungskupplung nach einem der Ansprüche 1 bis 6, **dadurch gekennzeichnet, dass** die mindestens eine Pendelmasse (20, 22, 24) mittels mindestens einer Kulissenführung (42) zwischen den Führungsflächen (26, 28) geführt ist.

8. Reibungskupplung nach Anspruch 7, **dadurch gekennzeichnet, dass** die mindestens eine Pendelmasse (20, 22, 24) und die die Führungsflächen bildenden Elemente (30, 32, 50) im Bereich dieser Führungsflächen (26, 28) mit Kulissenausnehmungen (44, 46) zum Eingriff mindestens eines Führungsstiftes (48) versehen sind.

9. Reibungskupplung nach einem der Ansprüche 1 bis 8, **gekennzeichnet durch** mindestens eine mit der Anpressplatte (56) verbundene, insbesondere als Blattfeder ausgestaltete, Rückstellfeder zur automatischen Positionierung der Anpressplatte (56) relativ zur Gegenplatte (50) bei einer fehlenden auf die Anpressplatte (56) wirkenden Betätigungskraft.

## Claims

1. Friction clutch (12) for coupling a drive shaft of a motor vehicle engine to at least one transmission input shaft, having an engine-side balancing and connecting element (62), a counter-plate (50), a pressure plate (56) which can be moved relative to the counter-plate (50) in order to press a clutch plate (58) between the counter-plate (50) and the pressure plate (56), and at least one centrifugal force pendulum (14, 16, 18) which is connected to the counter-plate (50) and/or a clutch cover (30) for rotational speed-dependent torsional vibration damping, the centrifugal force pendulum (14, 16, 18) having a pendulum mass (20, 22, 24) which is guided movably between two guide faces (26, 28) which are arranged so as to lie opposite one another, **characterized in that** at least one of the two guide faces (26) is configured directly on the clutch cover (30) and/or at least one of the two guide faces (26) is configured directly on the counter-plate (50), the pendulum masses (20, 22, 24) of the centrifugal force pendulum (14, 16, 18) being arranged between the counter-plate (50) and the engine-side balancing and connecting element (62).

2. Friction clutch according to Claim 1, **characterized in that** one of the two guide faces (26) of the centrifugal force pendulum (14, 16, 18) is configured directly on the counter-plate (50) or directly on the clutch cover (30), and the other of the two guide faces (28) is formed by one side of a guide plate (32).

3. Friction clutch according to Claim 1 or 2, **characterized in that** a plurality of centrifugal force pendulums (14, 16, 18) are provided which are distributed circumferentially with regard to the friction clutch (12).

4. Friction clutch according to Claim 3, **characterized in that** the plurality of centrifugal force pendulums (14, 16, 18) form a centrifugal force pendulum unit (10) and have two common guide faces (26, 28).

5. Friction clutch according to one of Claims 1 to 4, **characterized in that** the two guide faces (26, 28) are of annular configuration, in particular are configured as annular planes.

6. Friction clutch according to one of Claims 2 to 5, **characterized in that** the guide plate (32) is fastened in a manner which is spaced apart to the counter-plate (50) or to the clutch cover (30) by means of holding elements (34), in particular holding sleeves for guiding through bolt shanks.

7. Friction clutch according to one of Claims 1 to 6, **characterized in that** the at least one pendulum mass (20, 22, 24) is guided by means of at least one slotted guide (42) between the guide faces (26, 28).

8. Friction clutch according to Claim 7, **characterized in that** the at least one pendulum mass (20, 22, 24) and the elements (30, 32, 50) which form the guide faces are provided, in the region of the said guide faces (26, 28), with slotted guide recesses (44, 46) for the engagement of at least one guide pin (48).

9. Friction clutch according to one of Claims 1 to 8, **characterized by** at least one restoring spring which is connected to the pressure plate (56) and is configured, in particular, as a leaf spring, for the automatic positioning of the pressure plate (56) relative to the counter-plate (50) in the absence of an actuating force which acts on the pressure plate (56).

## Revendications

1. Embrayage à friction (12) pour l'accouplement d'un arbre d'entraînement d'un moteur de véhicule automobile à au moins un arbre d'entrée de boîte de vitesses, comprenant
un élément d'équilibrage et de connexion du côté du moteur (62),
une plaque conjuguée (50),
une plaque de pressage (56) pouvant être déplacée par rapport à la plaque conjuguée (50) pour presser un disque d'embrayage (58) entre la plaque conjuguée (50) et la plaque de pressage (56) et
au moins un pendule à force centrifuge (14, 16, 18) connecté à la plaque conjuguée (50) et/ou à un couvercle d'embrayage (30) pour l'amortissement d'oscillations de torsion dépendant du régime, le pendule à force centrifuge (14, 16, 18) présentant une masse de pendule (20, 22, 24) qui est guidée de manière déplaçable entre deux surfaces de guidage (26, 28) disposées en regard l'une de l'autre, **caractérisé en ce qu'**au moins l'une des deux surfaces de guidage (26) est réalisée directement sur le couvercle d'embrayage (30) et/ou au moins l'une des deux surfaces de guidage (26) est réalisée directement sur la plaque conjuguée (50), les masses de pendule (20, 22, 24) du pendule à force centrifuge (14, 16, 18) étant disposées entre la plaque conjuguée (50) et l'élément d'équilibrage et de connexion du côté du moteur (62).

2. Embrayage à friction selon la revendication 1, **caractérisé en ce que** l'une des deux surfaces de guidage (26) du pendule à force centrifuge (14, 16, 18) est réalisée directement au niveau de la plaque conjuguée (50) ou directement au niveau du couvercle d'embrayage (30), et l'autre des deux surfaces de guidage (28) est formée par un côté d'une tôle de guidage (32).

3. Embrayage à friction selon la revendication 1 ou 2, **caractérisé en ce que** plusieurs pendules à force centrifuge (14, 16, 18) sont prévus, lesquels sont répartis sur la périphérie par rapport à l'embrayage à friction (12).

4. Embrayage à friction selon la revendication 3, **caractérisé en ce que** la pluralité de pendules à force centrifuge (14, 16, 18) forme une unité de pendule à force centrifuge (10) et présente deux surfaces de guidage communes (26, 28).

5. Embrayage à friction selon l'une quelconque des revendications 1 à 4, **caractérisé en ce que** les deux surfaces de guidage (26, 28) sont réalisées sous forme annulaire, en particulier sont réalisées sous forme de plans annulaires.

6. Embrayage à friction selon l'une quelconque des revendications 2 à 5, **caractérisé en ce que** la tôle de guidage (32) est fixée au moyen d'éléments de retenue (34), en particulier de douilles de retenue, pour le guidage de tige de vis, de manière espacée à la plaque conjuguée (50) ou au couvercle d'embrayage (30).

7. Embrayage à friction selon l'une quelconque des revendications 1 à 6, **caractérisé en ce que** l'au moins une masse de pendule (20, 22, 24) est guidée au moyen d'au moins un guide à coulisse (42) entre les surfaces de guidage (26, 28).

8. Embrayage à friction selon la revendication 7, **caractérisé en ce que** l'au moins une masse de pendule (20, 22, 24) et les éléments (30, 32, 50) formant les surfaces de guidage sont pourvus dans la région de ces surfaces de guidage (26, 28) d'évidements de coulisse (44, 46) pour l'engagement d'au moins une goupille de guidage (48).

9. Embrayage à friction selon l'une quelconque des revendications 1 à 8, **caractérisé par** au moins un ressort de rappel connecté à la plaque de pressage (56), en particulier réalisé sous forme de ressort à lame, pour le positionnement automatique de la plaque de pressage (56) par rapport à la plaque conjuguée (50) en l'absence de force d'actionnement exercée sur la plaque de pressage (56).
